# EUROPEAN PATENT APPLICATION

(11) **EP 4 488 487 A1**
(43) Date of publication of application: **08.01.2025**
(21) Application number: 23306129.0
(22) Date of filing: 04.07.2023
(51) Int. Cl.: E21B 17/01, E21B 19/00, F16L 1/12, F16L 9/147, H02G 1/10, H02G 9/02, H02G 9/12, H02G 15/007, H02G 15/013

(54) **CABLE SYSTEM CONNECTABLE TO AN OFFSHORE STRUCTURE**

(71) Applicant: Nexans, 92400 Courbevoie (FR)
(72) Inventor: GOODING, Tina, 1710 Sarpsborg (NO); SVAROD, Ulf, 1798 Aremark (NO); JOHANSON, Audun, 0661 Oslo (NO); OPSTAD, Ketil, 1712 Gralum (NO); GJOLMESLI, Elisabeth, 0671 Oslo (NO); BERGENE, Oivind, 1786 Halden (NO); HALL, Jon-Arne, 1709 Sarpsborg (NO)
(74) Representative: Ipsilon

(57) **Abstract**

The present invention relates to a transfer system connectable to an offshore structure. The transfer system comprises a transfer device connectable to a connector box on the offshore structure. The transfer device comprises a tensile element; wherein the transfer device is defined with a lower section and an upper section, wherein the tensile element is removed from at least parts of the upper section. The transfer system further comprises a hang-off device comprising a base mechanically connectable to the offshore structure. The hang-off device comprises a first element pivotably connected to the base at a first pivoting axis. The lower section is suspended from the first element into a wet zone of the offshore structure while the upper section is extending above the first element into a dry zone of the offshore structure.

## Description

### TECHNICAL FIELD

The present invention relates to a cable system connectable to an offshore structure. The present invention also relates to a method for connecting an end of a cable to an offshore structure.

### BACKGROUND

Dynamic cables suspended from floating or fixed offshore units will experience repeated bending because of environmental loads or floater movement that could lead to fatigue failure of cable components. Currently, this challenge is typically addressed by introducing a bend stiffener over the cable at the floating or fixed offshore structure interface to distribute cable curvature over the length of the stiffener to ensure that the local strains are kept below a critical value.

The primary aim of the invention is to reduce strain variations in cable components.

A secondary aim of the invention is to move the point of cable bending at the structure interface to a point above hang-off where there is no need for a water barrier for the cable.

### SUMMARY OF THE INVENTION

The present invention relates to a transfer system connectable to an offshore structure, wherein the transfer system comprises:
- a transfer device connectable to a connector box on the offshore structure, wherein the transfer device comprises a tensile element; wherein the transfer device is defined with a lower section and an upper section, wherein the tensile element is removed from at least parts of the upper section;

wherein the transfer system further comprises a hang-off device comprising:
   - a base mechanically connectable to the offshore structure;
   - a first element pivotably connected to the base at a first pivoting axis;
wherein the lower section is suspended from the first element into a wet zone of the offshore structure;
wherein the upper section is extending above the first element into a dry zone of the offshore structure.

As used herein, the term "transfer device" is a device for transferring electrical power, signals, fluids etc. to and from the offshore structure.

As used herein, the term "tensile element" is used for a part of the transfer device whose primary purpose is to provide mechanical strength and / or protection of the transfer device, to allow the transfer device to be suspended from the offshore structure.

Hence, the weight of the transfer device is carried by the first element. The weight is then transferred further to the offshore structure via the base.

As the first element is pivotably connected to the base, the first element may be considered as a first pivoting element.

In one aspect, the offshore structure is a floating structure.

In one aspect, the offshore structure is a fixed structure.

In one aspect, the hang-off device is provided in a center position of a deck of the offshore structure, above the waterline of the offshore structure.

In one aspect, the hang-off device is provided in a balcony attached to a side of the offshore structure, above the waterline of the offshore structure.

The tensile element may be secured to the first element.

The base may comprise an opening, and the first element may comprise an opening, wherein the upper section may be provided through the opening of the base and further through the opening of the first element.

The hang-off device may comprise one single element, i.e. the first element. The first element may be connected directly to a top surface of the base.

In one aspect, the first pivoting axis may be provided at a distance away from the top surface of the base.

The hang-off device further comprises:
- a second element connected between the first element and the base; wherein the first element may be pivotably connected to the second element at the first pivoting axis and wherein the second element may be pivotably connected to the base at a second pivoting axis;
wherein the second pivoting axis may be different from the first pivoting axis.

The first pivoting axis may be perpendicular to the second pivoting axis.

The first element is here indirectly connected to the base, as the first element is pivotably connected to the base via the second element. The second element is therefore an intermediate element between the first element and the base. The weight of the transfer device is here carried by the first element and is then transferred further to the offshore structure via the second element and the base.

As the second element is pivotably connected to the base and to the first element, the second element may be considered as a second pivoting element.

The second pivoting axis of the second element may be connected directly to, or at a distance away from, a top surface of the base, and the first pivoting axis of the first element may be connected directly to, or at a distance away from a top surface of the second element.

The second element may comprise an opening, wherein the lower section may be provided through the opening of the second element.

The base may comprise a cylindrical section and a flange section provided above the cylindrical section, wherein the flange section forms the top surface.

In one aspect, the cylindrical section and/or the flange section of the base are mechanically connectable to the offshore structure.

The transfer device may comprise an electric conductor and an insulation layer outside of each electric conductor, wherein the tensile element may be provided outside of the insulation layer.

The electric conductor is used to transfer electric power to and from the offshore structure.

In this case the transfer device may be referred to as a power cable and the transfer system may be referred to as a power cable system. The electric conductor may be configured to be electrically connectable to the connector box. The transfer device may comprise more than one electric conductor, where each electric conductor has an insulation layer.

The transfer device may comprise a water barrier, wherein the water barrier may be removed from the upper section.

As used herein, the term "water barrier" is used for a part of the transfer device whose primary purpose is to prevent water from entering parts of the transfer device located inside of the water barrier.

The transfer device may comprise a fluid line.

The fluid line is used to transfer a fluid to and from the offshore structure.

In this case the transfer device may be referred to as an umbilical, a flexible pipe or an integrated production umbilical. The transfer system may be referred to as an umbilical system, a flexible pipe system or integrated production umbilical system. The fluid line may be configured to be provided in fluid communication with the connector box. In case the transfer device has both an electric conductor and a fluid line, the offshore structure may comprise a first connector box for electric power and a second connector box for fluid. Of course, the offshore structure may comprise several types of connector boxes.

The first element may comprise a clamp for securing the transfer device to the first element.

In one aspect, the clamp is securing the upper end of the lower section to the first element.

In one aspect, the clamp is securing a lower end of the upper section to the first element.

In one aspect, the first element is defining a separation line between the lower section and the upper section.

The present invention also relates to a method for connecting an end of a transfer device to an offshore structure, wherein the method comprises the steps of:
- pulling the end of the transfer device up to the offshore structure;
- connecting a hang-off device according to the above mechanically to the offshore structure;
- removing the tensile element from an upper section of the transfer device;
- suspending the transfer device from the first element.

The method may comprise the further steps of:
- allowing the first element to pivot about the first pivoting axis relative to the base.

The present invention also relates to a method for connecting an end of a transfer device to an offshore structure, wherein the method comprises the further steps of:
- suspending the transfer device from a hang-off device with a first and a second element;
- allowing the first element to pivot about the first pivoting axis relative to the second element and
- allowing the second element to pivot about the second pivoting axis relative to the base.

The method may comprise the step of:
- connecting the hang-off device to the transfer device as part of a manufacturing process of the transfer device or as part of a transfer device installation process.

According to the above, the stiffness of the upper section is less than the stiffness of the lower section due to the removal of the tensile element and possibly also due to removal of the water barrier.

According to the above, it is achieved that the roll and pitch motion of the offshore structure causes angular deflection of the transfer device partly or fully to be realized by pivoting around the first and/or second pivoting axes in the hang-off device and bending of the transfer device above this hang-off device, rather than bending of the transfer device below the hang-off device.

According to the above, a bend stiffener which is typically used in the above type of transfer systems can be avoided, or the dimensions of the bend stiffener may be reduced.

### BRIEF DESCRIPTION OF DRAWINGS

Fig. 1 illustrates schematically a floating structure in which a transfer device is received from the sea and terminated in the offshore structure.
Fig. 2 illustrates a perspective view of a hang-off device in the transfer system comprising a base and a first element.
Fig. 3 illustrates schematically the transfer system being connected to the offshore structure with a hang-off device having a base and a first element.
Fig. 4 illustrates schematically the distance between the pivoting axes and the surface of the first and second element.
Fig. 5 illustrates a perspective view of a hang-off device in the transfer system comprising a base and a first and a second element.
Fig. 6 illustrates schematically the transfer system being connected to the offshore structure with a hang-off device having a base and a first and a second element.
Fig. 7a illustrates a cross sectional view of a transfer device.
Fig. 7b illustrates a cross sectional view of another embodiment of the transfer device.
Fig. 7c illustrates a cross sectional view of yet another embodiment of the transfer device.
Fig.8a-c illustrate schematically the method for connecting an end of a cable to a floating structure.

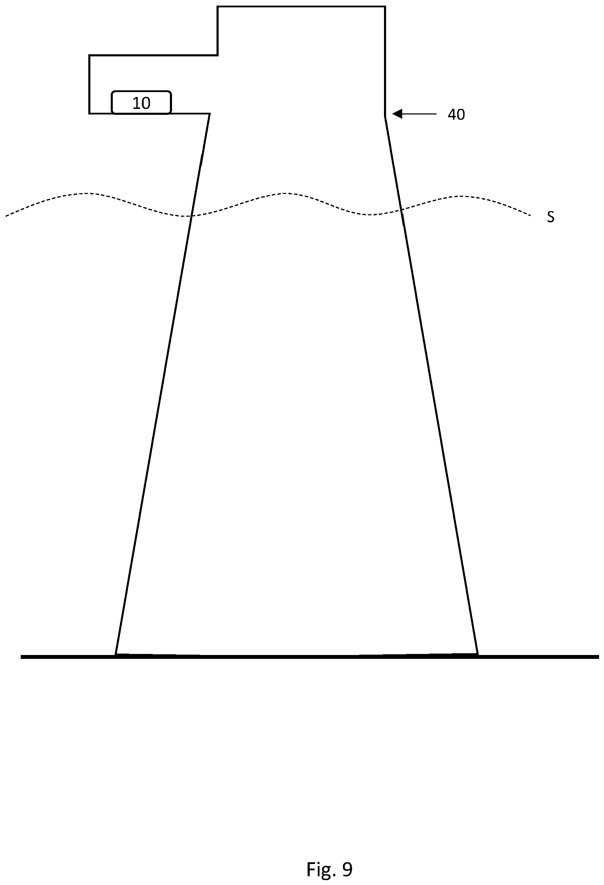

Fig. 9 illustrates schematically a floating structure with a balcony structure for the hang-off device.

### DETAILED DESCRIPTION

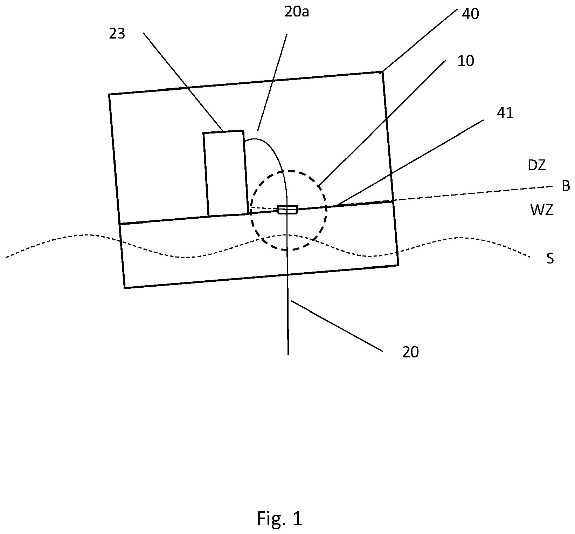

It is now referred to fig. 1. Here it is shown an offshore structure 40 with a deck 41 defining a separation line B between a dry zone DZ of the offshore structure 40 being above the separation line B and a wet zone WZ of the offshore structure 40 being below the separation line B.

The offshore structure 40 will move relative to the sea S according to weather conditions, wind and waves, sea currents etc.

A transfer device 20 is suspended from the offshore structure 40. As shown, the transfer device 20 is guided through a hang-off device 10 mechanically supported in the deck 41. An end 20a of the transfer device 20 is connected to a connector box 23 of the offshore structure 40.

Embodiments of the invention will be described in detail below.

### Example 1: Transfer device 20 in the form of a high voltage subsea cable

In the present embodiment, the offshore structure 40 is a floating wind power platform and the transfer device 20 is a subsea dynamic high voltage cable 20 that is electrically connected to the connector box 23.

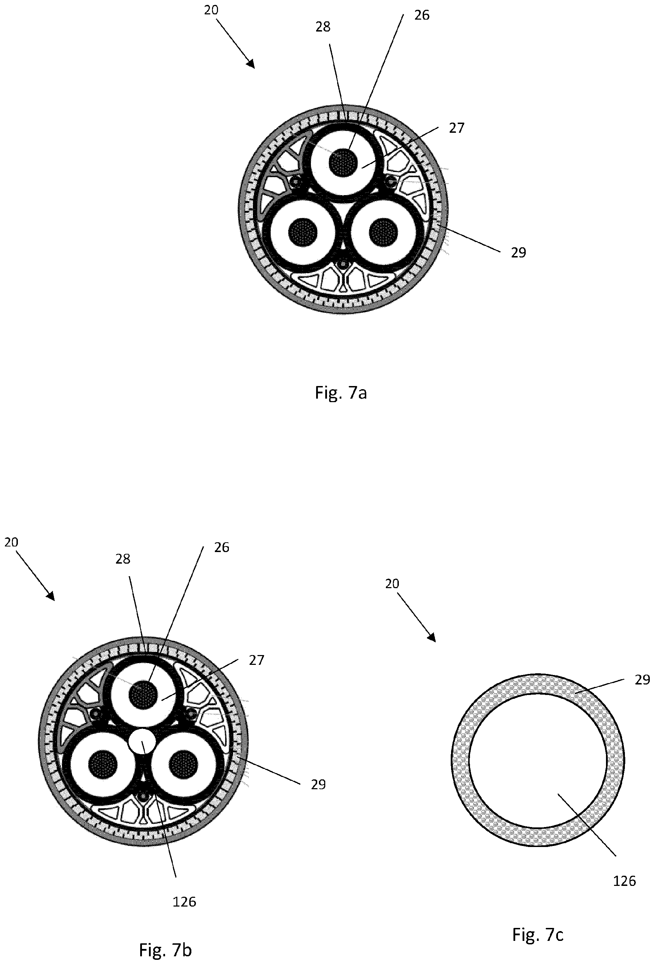

The cable 20 will now be described with reference to fig. 7a. The cable 20 is here used to transfer electric power to and from the offshore structure 40. The cable 20 is provided with three conductors 26, each with an insulation layer 27 outside of each conductor 26 and a water barrier 28 outside of each insulation layer 27. Moreover, the cable is provided with tensile elements 29 outside of the water barrier 28, in this instance outside the bundled power phases.

The tensile elements 29 refer to the part of the cable 20 whose primary purpose is to provide tensile strength and / or mechanical protection, to allow the cable 20 to be suspended from the offshore structure 40.

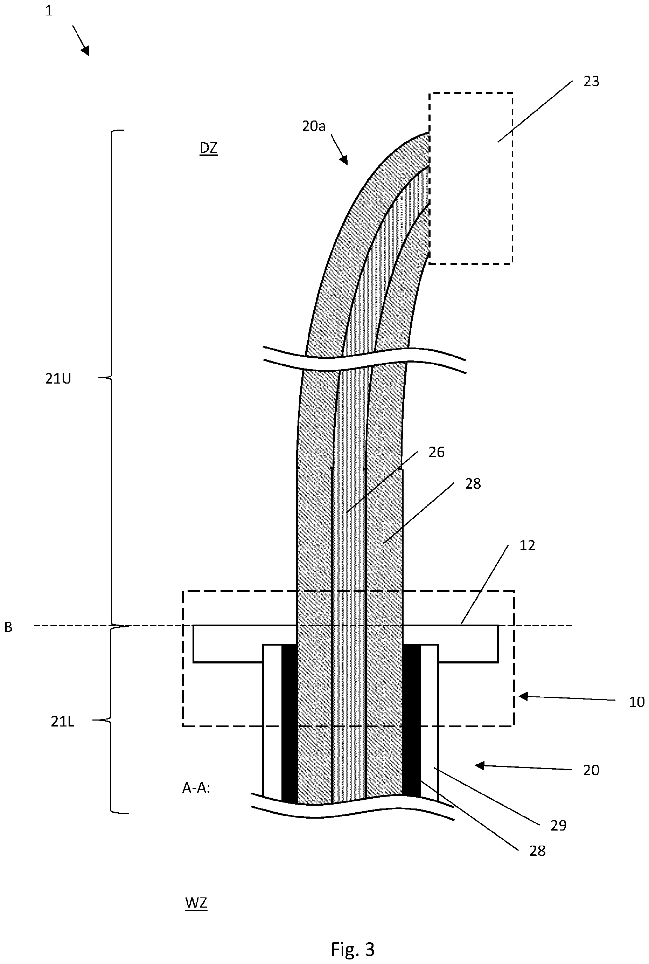

It is now referred to fig. 3. Here, the hang-off device 10 is schematically illustrated as a dashed box, where the border B between the wet zone WZ and the dry zone DZ is also indicated similar to fig. 1.

Fig. 3 further shows that the first end 20a of the cable 20 guided up through the hang-off device 10. The cable 20 is defined with a lower section 21L and an upper section 21U. The lower section 21L extends down into the wet zone WZ while the upper section 21U extends up into the dry zone DZ. As shown in fig. 3, the water barrier 28 and the tensile elements 29 are removed from the upper section 21U. Hence, the upper cable section 21U becomes more flexible than the lower cable section 21L.

### Hang-off device 10 - example 1

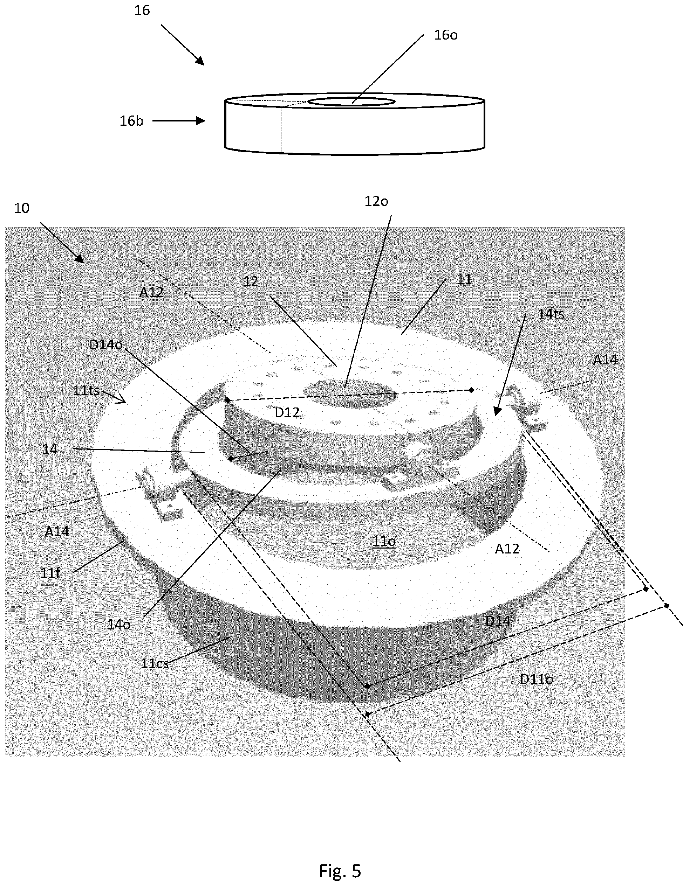

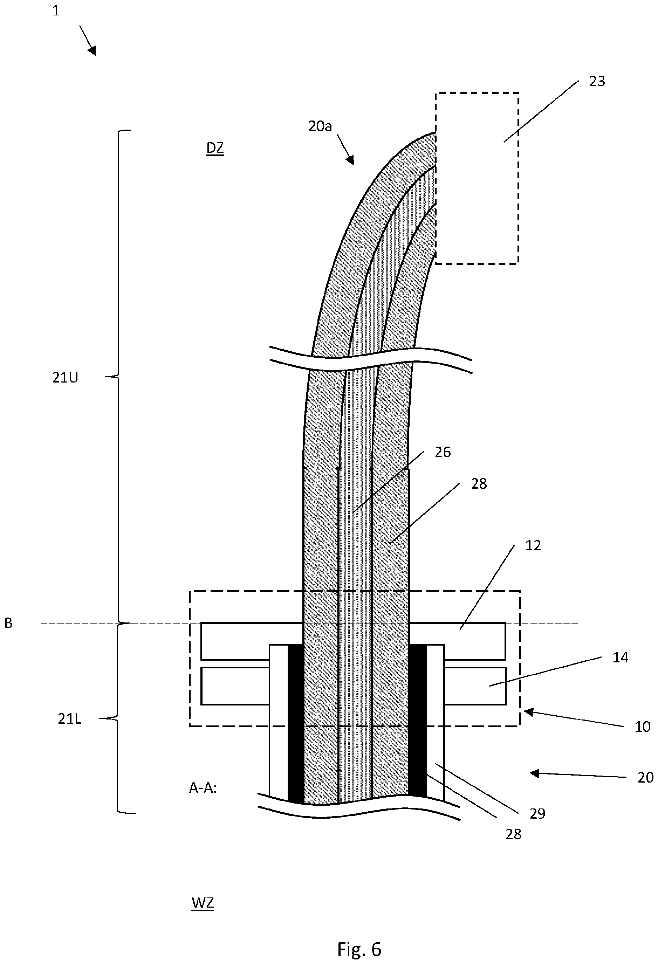

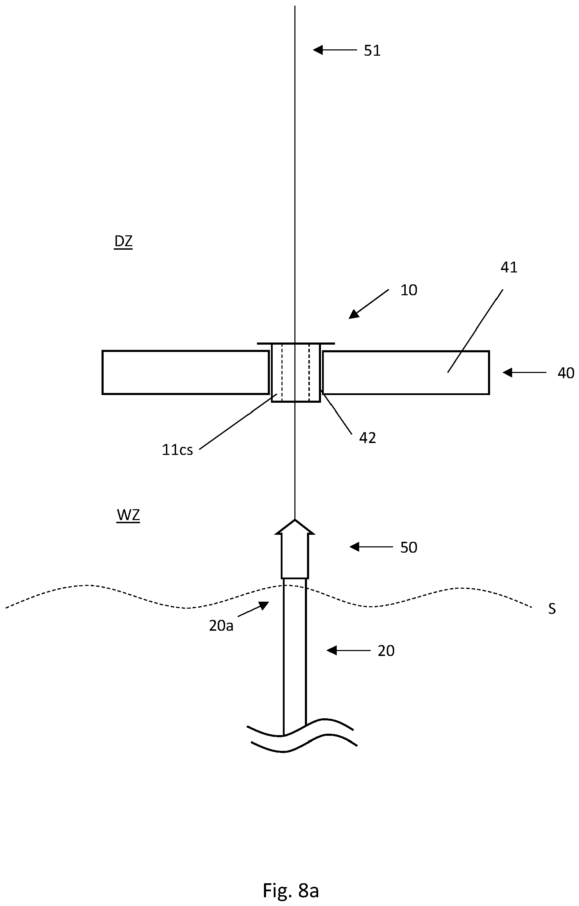

The hang-off device 10 will now be described with reference to fig. 5 and fig. 6. The hang-off device 10 comprises a base 11 with a cylindrical section 11cs and a flange section 11f provided above the cylindrical section 11cs. The flange section 11f has a top surface 1 1ts. The base 11 is inserted into an opening 42 (fig. 8a) of the deck 41 (shown in fig. 1 and fig. 8a). In this way, the base 11 is mechanically connected to, and is mechanically supported by, the offshore structure 40. The base 11 further comprises an opening 11o in the form of a through hole, where the opening 11o may be circular with a diameter D11o.

The hang-off device 10 further comprises a first element 12 and a second element 14.

The first element 12 is here circular and is defined with an outer diameter D12. The first element 12 further comprises an opening 12o, where the opening 12o is circular and has a diameter D12o.

The second element 14 is also circular and is defined with an outer diameter D14. The second element 14 further comprises an opening 14o, where the opening 14o is circular and has a diameter D14o. As shown in fig. 5, the second element 14 is located above the base 11, while the first element 12 is located above the second element 14.

The first element 12 is pivotably connected to the second element 14 at a first pivoting axis A12. When the diameter D14o is larger than the diameter D12, it is achieved that the first element 12 is allowed to at least partially pivot into the opening 14o of the second element 14.

The hang-off device 10 further comprises a second element 14. The second element 14 is pivotably connected to the top surface 11ts of the base 11 at a second pivoting axis A14.

The first pivoting axis A12 is different from the second pivoting axis A14. Here, the diameter D11o is larger than the diameter D14. Hence, it is achieved that the second element 14 is allowed to at least partially pivot into the opening 11o of the base 11.

The tensile elements 29 (fig. 6) may be secured to the first element 12 of fig. 5. Alternatively, the tensile elements 29 (fig. 6) may be secured to a clamp 16 (fig. 5) above the first element 12, whereupon the clamp 16 is lowered onto the first element 12.

### Hang-off device 10 - example 2

A further embodiment of the hang-off device 10 will now be described. This example corresponds to example 1 above, and only the differences between example 1 and this example will be described.

In this example, the hang-off device has three or more elements. The further element or elements are positioned between the base 11 and the first element 12. Each further element is pivotably connected to its adjacent element below and above.

### Hang-off device 10 - example 3

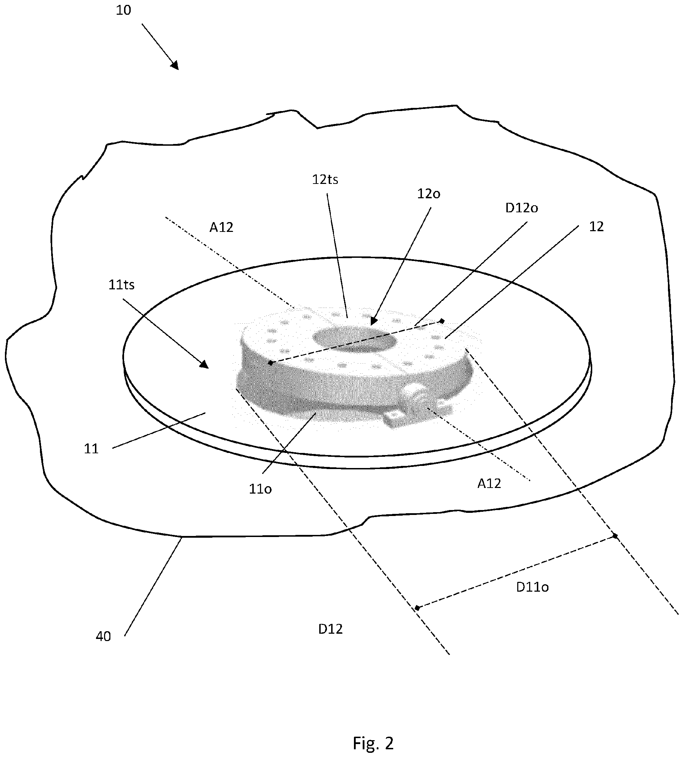

A simplified embodiment of the hang-off device 10 will now be described with reference to fig. 2 and fig. 3. This example corresponds to example 1 above, and only the differences between example 1 and this example will be described in detail.

In fig. 2 it is shown that the hang-off device 10 does not have the second element 14. Hence, the hang-off device 10 has only one single element, i.e. the first element 12, being pivotably connected directly to the base 11.

### Hang-off device 10 - example 4

It is now referred to 4b. This example corresponds to example 1 above, and only the differences between example 1 and this example will be described in detail.

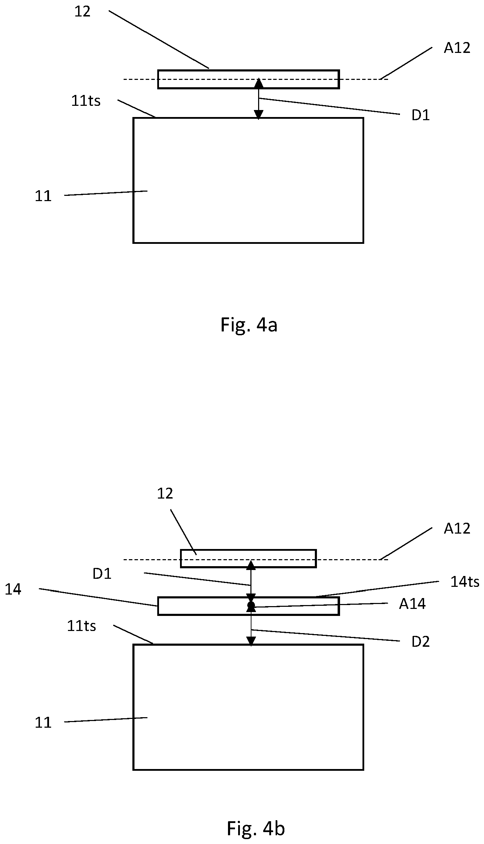

In fig. 4b, it is shown that the first pivoting axis A12 is connected at a distance D1 away from the top surface 14ts of the second element 14, while the first pivoting axis A14 is connected at a distance D2 away from the top surface 11ts of the base 11.

When the pivoting axis A14 is provided at a distance D2 from the top surface 11ts, the second element 14 may pivot at least partly relative to the base 11 also when the second element 14 is larger than the opening 11o. Similarly, when the pivoting axis A12 is provided at a distance D1 from the top surface 14ts, the first element 12 may pivot at least partly relative to the second element 14 also when first element 12 is larger than the opening 14o.

If there are more than two elements as shown in example 2, then the same distance away from the top surface would apply also to the further elements.

### Hang-off device 10 - example 5

It is now referred to 4a. This example corresponds to example 3 and 4 above. As in example 3, there is only one element 12 pivotably connected to the base 11. As in example 4, the first element 12 is connected at a distance D1 from the top surface 11ts of the base.

### Method of connecting the transfer device 20 to the offshore structure 40

A method for connecting the transfer device 20 to the offshore structure 40 will now be described. The hang-off device 10 is here from example 1 above.

Initially, the hang-off device 10 is mechanically connected to the opening 42 of the deck 41 of the offshore structure 40 as shown in fig. 8a

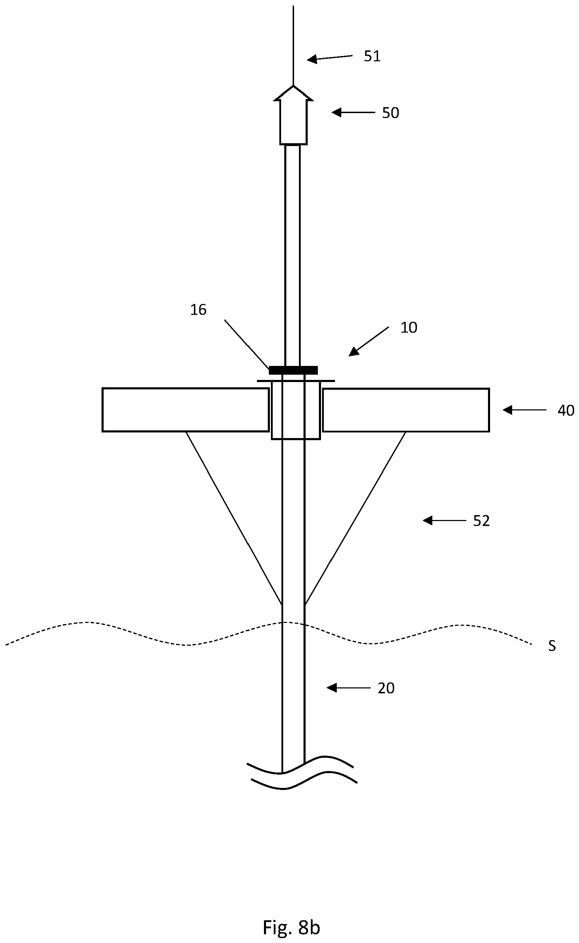

The cable 20 is now pulled up from the sea by means of a pull-in head or cable grip 50 secured to the end 20a of the cable 20 and a wire 51 fastened to the pull-in head or cable grip 50. As shown in fig. 8b, the cable 20 has been pulled up through the hang-off device 10, i.e. through the opening 11o of the base, through the opening 14o of the second element 14 and further through the opening 12o of the first element 12.

Now, the upper cable section 21U of the cable 20 is prepared by removing the water barrier 28 and the tensile elements 29 from the cable 20, resulting in the cable shown in fig. 6. This results in the stiffness of the upper cable section 21U being lower than the stiffness of the lower section 21L.

The lower cable section 21L is suspended from the first element 12 by securing the tensile elements 29 to the first element 12. This is achieved by mechanically connecting the tensile elements 29 of the lower cable section 21L directly to the first element 12 or by securing the tensile elements 29 to the clamp 16.

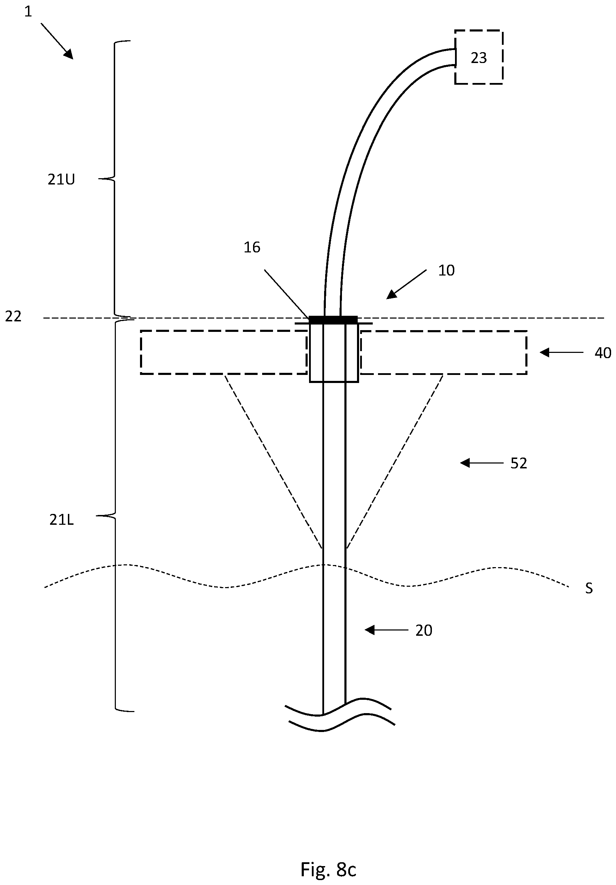

The one or more conductors 26 of the cable 20 are then electrically connected to the connector box 23 as shown in fig. 8c. The connection box 23 is indicated as a dashed rectangle to illustrate that it is not a part of the cable system 1.

When in operation, the first element 12 pivots about the first pivoting axis A12 relative to the base 11 for the hang-off devise 10 according to example 3. For the hang-off device 10 according to example 1, the second element 14 pivots about the second pivoting axis A14 relative to the base 11 while the first element 12 is pivotably connected to the second element 14 to pivot about the first pivoting axis A12 relative to the second element 14.

Roll and pitch motion of the offshore structure 40 causes angular deflection of the cable 20 relative to the offshore structure 40 that is partly or fully compensated by the first element 12 pivoting about the first pivoting axis A12 and if present, the second element 14 pivoting about the second pivoting axis A14, while the upper cable section 21U bends above the hang-off device 10. This prevents or reduces bending of the lower cable section 21L. The movements of the offshore structure 40 will therefore cause less fatigue on the cable 20, in particular to the lower cable section 21L.

With this configuration, a bend stiffener, which is typically used in the above cable system, can be avoided, or the dimensions of the bend stiffener can be reduced.

### Alternative embodiments

In the above example, the cable 20 was a three-conductor electrical cable. It should be noted that the cable may comprise only one conductor 26, one insulation element 27, one water barrier 28 and/or one tensile element 29.

In a further alternative embodiment, the hang-off device 10 is connected to the cable 20 as part of a manufacturing process of the cable or as part of the deployment process of the cable into the sea.

It is now referred to fig. 7b. Here it is shown that the transfer device 20, in addition to the electrical conductors 26 for transmitting electrical power, the insulation layers 27, the water barriers 28 and the tensile elements 29, comprises a fluid line 126 which is used to transfer a fluid to and from the offshore structure 40. In this case the transfer device 20 may be referred to as an umbilical.

It is now referred to fig. 7c. Here it is shown that the transfer device 20 comprises only a fluid line 126 which is used to transfer a fluid to and from the offshore structure 40 in addition to the tensile elements 29. In this case, the transfer device 20 may be referred to as a flexible pipe.

In yet alternative embodiments, the transfer device is an integrated production umbilical.

In the above embodiments, the transfer system 1 may be referred to as an umbilical system 1, a flexible pipe system or an integrated production umbilical system. The fluid line 126 may be configured to be provided in fluid communication with the connector box 23. In case the transfer device 20 has both an electric conductor 26 and a fluid line 126, the offshore structure may comprise a first connector box for electric power and a second connector box for fluid.

### LIST OF REFERENCE NUMBERS

- 1: transfer system
- 10: hang-off device
- 11: base
- 11cs: cylindrical section
- 11f: flange section
- 11o: opening
- 11ts: top surface
- 12: first element
- 12o: opening
- 12ts: top surface
- 14: second element
- 14o: opening
- 20: transfer device
- 20a: end
- 21L: lower section
- 21U: upper section
- 23: connector box
- 26: electric conductor
- 27: insulation layer
- 28: water barrier
- 29: tensile element
- 40: offshore structure
- 126: fluid line
- A12: first pivoting axis
- A14: second pivoting axis
- B: separation line
- D1: distance
- D2: distance
- DZ: dry zone
- WZ: wet zone

## Claims

1. A transfer system (1) connectable to an offshore structure (40), wherein the transfer system (1) comprises:
- a transfer device (20) connectable to a connector box (23) on the offshore structure (40), wherein the transfer device (20) comprises a tensile element (29);
wherein the transfer device (20) is defined with a lower section (21L) and an upper section (21U), wherein the tensile element (29) is removed from at least parts of the upper section (21U);
wherein the transfer system (1) further comprises a hang-off device (10) comprising:
- a base (11) mechanically connectable to the offshore structure (40);
- a first element (12) pivotably connected to the base (11) at a first pivoting axis (A12);
wherein the lower section (21L) is suspended from the first element (12) into a wet zone (WZ) of the offshore structure (40);
wherein the upper section (21U) is extending above the first element (12) into a dry zone (DZ) of the offshore structure (40).

2. The transfer system (1) according to claim 1, wherein the tensile element (29) is secured to the first element (12).

3. The transfer system (1) according to claim 1 or 2, wherein the base (11) comprises an opening (11o), and wherein the first element (12) comprises an opening (12o), wherein the upper section (21U) is provided through the opening (11o) of the base (11) and further through the opening (12o) of the first element (12).

4. The transfer system (1) according to any one of claims 1-3, wherein the first element (12) is connected directly to a top surface (11ts) of the base (11).

5. The transfer system (1) according to any one of claims 1-3, wherein the hang-off device (10) further comprises:
- a second element (14) connected between the first element (12) and the base (11); wherein the first element (12) is pivotably connected to the second element (14) at the first pivoting axis (A12) and wherein the second element (14) is pivotably connected to the base (11) at a second pivoting axis (A14);
wherein the second pivoting axis (A14) is different from the first pivoting axis (A12).

6. The transfer system (1) according to claim 5, wherein
the second pivoting axis (A14) of the second element (14) is connected directly to, or at a distance (D2) away from, a top surface (11ts) of the base (11), and the first pivoting axis (A12) of the first element (12) is connected directly to, or at a distance (D1) away from a top surface (14ts) of the second element (14).

7. The transfer system (1) according to claims 5 or 6, wherein the second element (14) comprises an opening (14o), wherein the lower section (21L) is provided through the opening (14o) of the second element (14).

8. The transfer system (1) according to any one of the above claims, wherein the base (11) comprises a cylindrical section (11cs) and a flange section (11f) provided above the cylindrical section (11cs), wherein the flange section (11f) forms the top surface (11ts).

9. The transfer system (1) according to any one of the above claims, wherein the transfer device (20) comprises an electric conductor (26) and an insulation layer (27) outside of each electric conductor (26), wherein the tensile element (29) is provided outside of the insulation layer (27).

10. The transfer system (1) according to any one of the above claims, wherein the transfer device (20) comprises a water barrier (28), wherein the water barrier (28) is removed from the upper section (21U).

11. The transfer system (1) according to any one of the above claims, wherein the transfer device (20) comprises a fluid line (126).

12. The transfer system (1) according to any one of the above claims, wherein the transfer system (1) comprises a clamp (16) for securing the transfer device (20) to the first element (12).

13. A method for connecting an end of a transfer device (20) to an offshore structure (40), wherein the method comprises the steps of:
- pulling the end (20a) of the transfer device (20) up to the offshore structure (40);
- connecting a hang-off device (10) according to any one of the above claims mechanically to the offshore structure (40);
- removing the tensile element (29) from an upper section (21U) of the transfer device (20);
- suspending the transfer device (20) from the first element (12).

14. A method for connecting an end of a transfer device (20) to an offshore structure (40) according to claim 13, wherein the method comprises the further steps of:
- allowing the first element (12) to pivot about the first pivoting axis (A12) relative to the base (11).

15. A method for connecting an end of a transfer device (20) to an offshore structure (40), wherein the method comprises the further steps of:
- suspending the transfer device (20) from a hang-off device (10) according to claim 5;
- allowing the first element (12) to pivot about the first pivoting axis (A12) relative to the second element (14); and
- allowing the second element (14) to pivot about the second pivoting axis (A14) relative to the base (11).

16. The method according to anyone of claims 13-15, wherein the method comprises the step of:
- connecting the hang-off device (10) to the transfer device (20) as part of a manufacturing process of the transfer device (20) or as part of a transfer device installation process.
